# EUROPÄISCHE PATENTSCHRIFT

(11) **EP 1 060 329 B1**
(45) Veröffentlichungstag und Bekanntmachung des Hinweises auf die Patenterteilung: **15.05.2002**
(21) Anmeldenummer: 99915479.2
(22) Anmeldetag: 15.02.1999
(51) Int. Cl.: F01N 3/00

(54) **DOSIERSYSTEM**
DOSING SYSTEM
SYSTEME DE DOSAGE

(30) Priorität: 16.02.1998 DE 19806265
(43) Veröffentlichungstag der Anmeldung: 20.12.2000
(73) Patentinhaber: SIEMENS AKTIENGESELLSCHAFT, 80333 München (DE)
(72) Erfinder: HOFMANN, Lothar, D-96264 Altenkunstadt (DE); MATHES, Wieland, D-96247 Michelau (DE)
(86) Internationale Anmeldenummer: DE9900419
(87) Internationale Veröffentlichungsnummer: WO9941492

(56) Entgegenhaltungen:
- EP-A- 0 441 401
- WO-A-93/21432
- US-A- 5 522 218
- US-A- 5 605 042

## Beschreibung

Die Erfindung bezieht sich auf ein Dosiersystem zur druckluftlosen Einbringung eines Reduktionsmittels in einen Abgasraum einer Verbrennungsanlage.

Zur Entfernung von Schadstoffen aus einem Abgas einer Verbrennungsanlage können katalytische Reinigungsverfahren vorgesehen sein. Katalytische Reinigungsverfahren, bei denen ein Schadstoff als ein erster Reaktand mit einem zusätzlich in das Abgas eingebrachten Medium als zweitem Reaktanden reagiert, finden Verwendung bei sogenannten reduktionsmittelbetriebenen Abgasreinigungsanlagen.

Bei reduktionsmittelbetriebenen Abgasreinigungsanlagen handelt es sich bei dem in den Abgasraum einzubringenden Medium um ein Reduktionsmittel, das einen oder mehrere Schadstoffe des Abgases reduziert. Die in den Abgasraum einzubringende Menge des Reduktionsmittels richtet sich nach der jeweiligen Schadstoffmenge. Diese kann zu verschiedenen Zeiten unterschiedlich groß sein. Die jeweils einzubringende Menge an Reduktionsmittel wird üblicherweise über eine elektrische Regeleinheit vorgegeben.

Handelt es sich bei den verwendeten Reduktionsmitteln um gelöste Feststoffe, insbesondere Harnstoff (NH₂-CO-NH₂), so kann eine Aufheizung des Reduktionsmittels zu einer Verdampfung und/oder zu einem Ausflocken einzelner Lösungsbestandteile führen. Als Folge bleiben dann Feststoffe zurück. Diese sind nach entsprechender Aufheizung an den mit dem Abgas in Berührung stehenden Teilen meistens nicht wieder zu entfernen. Derartige Rückstände können zu Funktionsstörungen im Leitungssystem des Reduktionsmittels führen. Beispielsweise besteht die Gefahr der mechanischen Verstopfung einer Düse, die üblicherweise der Einbringung des Reduktionsmittels in den Abgasraum dient. Deswegen soll die Wärme des Abgasraumes, in welchem Temperaturen von beispielsweise bis zu 600 °C herrschen, das Reduktionsmittel, das eine Temperatur von beispielsweise Umgebungstemperatur aufweist, nicht vor dem Einbringen in den Abgasraum aufheizen.

Um eine Aufheizung des Reduktionsmittels zu verhindern, unterstützt üblicherweise kühlende Druckluft die Eindüsung des Reduktionsmittels in den Abgasraum der Verbrennungsanlage. Hierzu ist aus der EP 0 558 452 B1 bekannt, die Eindüsung mittels einer sogenannten Zweistoffdüse vorzunehmen und dabei die notwendige Druckluft als ein Kühlmittel entlang der Zuführungsleitung zu führen. Die strömende Druckluft kühlt hierbei auch die in den Abgasraum mündende Düse. Alternativ ist aus der WO 96/36797 bekannt, die Mischung von Luft und Reduktionsmittel in einer Vormischkammer vorzunehmen. Diese ist über eine Leitung und eine Düse mit dem Abgaskanal so verbunden, daß die Vormischkammer nicht durch das heiße Abgas aufheizbar ist. Außerdem verhindert die zugemischte Luft eine Aufheizung des Reduktionsmittels.

Die Druckluftunterstützung bei der dosierten Einbringung von Reduktionsmittel in einen Abgasraum einer Verbrennungsanlage erfordert jedoch einen erheblichen technischen Aufwand. Außerdem ist beim Betrieb einer derartigen Verbrennungsanlage neben einer Kontrolle der dosierten Einbringung des Reduktionsmittels in den Abgasraum zusätzlich eine ständige Überwachung eines technisch aufwendigen Druckluftsystems erforderlich.

Der Erfindung liegt daher die Aufgabe zugrunde, ein Dosiersystem zur Einbringung eines Reduktionsmittels in einen Abgasraum einer Verbrennungsanlage anzugeben, das einen besonders geringen technischen Aufwand und im Betrieb ein besonders geringes Maß an Überwachung erfordert.

Diese Aufgabe wird erfindungsgemäß gelöst, indem ein elektrisch steuerbares Ventil vorgesehen ist, dessen Austrittsöffnung im Abgasraum angeordnet ist.

Die Erfindung geht dabei von der Überlegung aus, daß die Bereitstellung eines Dosiersystems, das im Betrieb ein besonders geringes Maß an Überwachung erfordert, mit geringem technischen Aufwand möglich ist, wenn ein technisch aufwendiges Druckluftsystem entfallen kann. Ein technisch aufwendiges Druckluftsystem kann entfallen, wenn der durch Druckluft zu kühlende Bereich zwischen der elektrisch steuerbaren Absperrstelle der Reduktionsmittelleitung und der Einspeisestelle des Reduktionsmittels in den Abgasraum besonders gering ausfällt. Dazu ist die Austrittsöffnung des elektrisch steuerbaren Ventils im Abgasraum angeordnet.

Um außerdem eine Erwärmung des Reduktionsmittels in den Bereichen, die durch die Wärme des durch den Abgasraum hindurchströmenden Abgases aufheizbar sind, besonders zuverlässig zu verhindern, ist vorteilhafterweise ein Umwälzkreislauf für das Reduktionsmittel vorgesehen. Zweckmäßigerweise ist in diesen Umwälzkreislauf ein unmittelbar vor der Ventilaustrittsöffnung angeordneter Vorhalteraum für das Reduktionsmittel geschaltet. Das in diesem vorgehaltene Reduktionsmittel kann somit trotz seiner Nähe zum Abgasraum durch eine ständige Umwälzung auf einer konstant niedrigen Temperatur gehalten werden. Es besteht somit nicht die Gefahr, daß das Reduktionsmittel verdampft und/oder ausflockt.

Das Ventil ist vorteilhafterweise durch einen Kühlmittelkreislauf kühlbar. Dieser kann in das Kühlsystem der jeweiligen Verbrennungsanlage integriert sein. Das Ventil kann sich dabei beispielsweise in einem von Kühlmittel durchflossenen Adapter befinden. Bei einer derartigen Anordnung ist durch das gekühlte Ventil und/oder durch den Umwälzkreislauf eine zusätzliche Kühlung des Reduktionsmittels sichergestellt.

Um eine besonders günstige Vermischung des Reduktionsmittels mit dem im Abgasraum der Verbrennungsanlage geführten Abgas herbeizuführen, ist das Ventil vorteilhafterweise derart an dem Abgasraum angeordnet, daß seine Hauptachse einen Winkel von weniger als 90° mit der Hauptströmungsrichtung des Abgases im Abgasraum einschließt. Durch diese Anordnung wird das Reduktionsmittel bei seinem Eintritt in den Abgasraum vom Abgas auf besonders einfache Weise mitgerissen, so daß die Vermischung begünstigt ist.

Vorteilhafterweise weist das Dosiersystem außerdem eine im Abgasraum angeordnete Prallvorrichtung auf. Diese Prallvorrichtung ist derart angeordnet, daß sie eine Richtungsänderung des in den Abgasraum eingebrachten Reduktionsmittels verursacht. Die damit verbundene zusätzliche Verteilung des Reduktionsmittels im Abgasraum ist insbesondere zweckmäßig, um eine besonders vollständige Reaktion des Reduktionsmittels mit einer Anzahl von Schadstoffen des Abgases herbeizuführen.

Das Dosiersystem findet vorteilhafterweise Verwendung bei der Einbringung von Harnstofflösung in einen Abgasraum eines Dieselmotors. Wie sich nämlich herausgestellt hat, ist gerade Harnstofflösung gegenüber einer Aufheizung, beispielsweise durch die Wärme des durch den Abgasraum hindurchströmenden Abgases, besonders empfindlich. Denn im Falle einer Verdampfung einzelner Lösungsmittelbestandteile der Harnstofflösung können Funktionsstörungen des Dosiersystems verursachende Feststoffe zurückbleiben.

Die Einbringung von Harnstofflösung ist insbesondere bei dem sogenannten SCR-Verfahren, der Selektiven Katalytischen Reduktion, als Vorstufe des nicht geruchsneutralen Ammoniaks (NH₃) vorgesehen. Das SCR-Verfahren wird üblicherweise zur Umsetzung von Stickoxiden (NOₓ) zu Stickstoff (N₂) und Wasser (H₂O) mit Hilfe von Ammoniak (NH₃) und eines Katalysators eingesetzt.

Die mit der Erfindung erzielten Vorteile bestehen insbesondere darin, daß durch den Verzicht auf ein technisch aufwendiges Druckluftsystem das Dosiersystem besonders einfach ausgeführt und betrieben werden kann. Der Verzicht auf ein technisch aufwendiges Druckluftsystem ist durch den Einsatz eines elektrisch steuerbaren Ventils möglich, dessen Austrittsöffnung unmittelbar in den Abgasraum mündet. Dies ist mit besonders geringem technischen Aufwand verbunden, denn dann fällt die elektrisch steuerbare Absperrstelle der Reduktionsmittelleitung im wesentlichen mit der Einspeisestelle für das Reduktionsmittel zusammen. Als Ventil kann auch ein üblicherweise zur Benzineinspritzung vorgesehenes Ventil verwendet werden.

Ein Ausführungsbeispiel der Erfindung wird anhand einer Zeichnung näher erläutert. Darin zeigen:
- FIG 1: eine Verbrennungsanlage mit einem Abgasraum, an den ein Dosiersystem zur Einbringung eines Reduktionsmittels angeschlossen ist,
- FIG 2: das unmittelbar am Abgasraum befestigte elektrisch steuerbare Ventil des Dosiersystems gemäß Figur 1 und
- FIG 3: im Längsschnitt das elektrisch steuerbare Ventil des Dosiersystems gemäß Figur 1.

Gleiche Teile sind in allen Figuren mit denselben Bezugszeichen versehen.

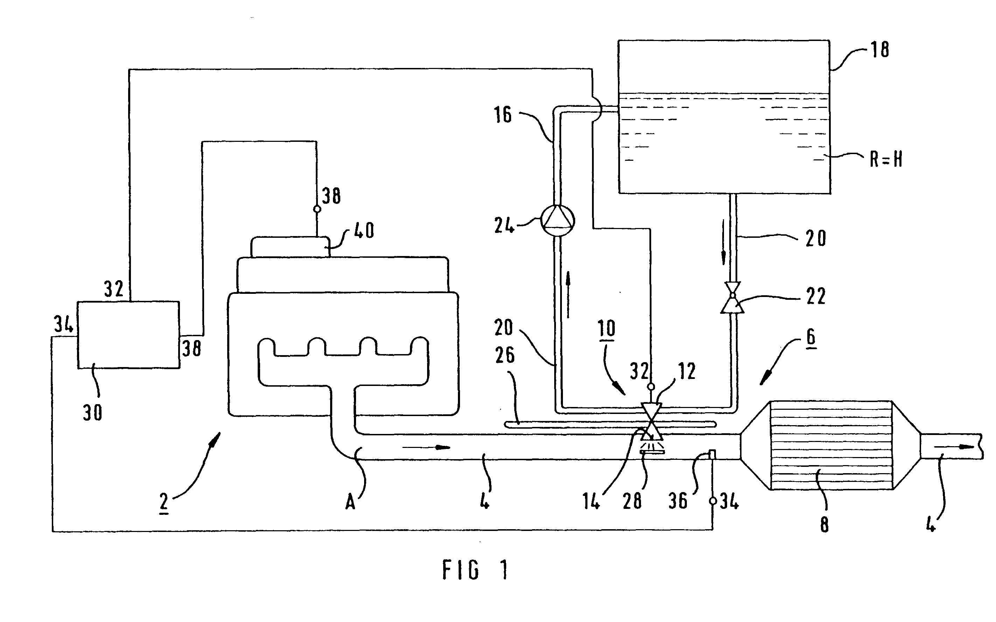

Die Verbrennungsanlage 2 gemäß Figur 1 ist als Dieselmotor ausgebildet. Das bei der Kraftstoffverbrennung im Dieselmotor entstehende Abgas A, das Schadstoffe enthält, gelangt über einen als Abgaskanal ausgebildeten Abgasraum 4 in die Umwelt. Um die Schadstoffbelastung der Umwelt möglichst gering zu halten, ist an den Abgasraum 4 ein Abgasreinigungssystem 6 angeschlossen.

Das Abgasreinigungssystem 6 weist einen im Abgasraum 4 angeordneten Katalysator 8 auf, der als ein sogenannter DeNOₓ-Katalysator ausgebildet ist. Dieser zersetzt nach dem bekannten SCR-Verfahren der Selektiven Katalytischen Reduktion Stickoxide (NOₓ) mit Hilfe eines zusätzlich in den Abgasraum 4 einzubringenden Reduktionsmittels R zu Stickstoff (N₂) und Wasser (H₂O). Als Reduktionsmittel R ist im Ausführungsbeispiel Harnstofflösung H vorgesehen, die im Abgasraum 4 Ammoniak (NH₃) freisetzt, der wiederum unmittelbar eine Reduktion der Stickoxide (NOₓ) bewirkt.

Zur Einbringung von Harnstofflösung H in den Abgasraum 4 umfaßt das Abgasreinigungssystem 6 ein Dosiersystem 10. Das Dosiersystem 10 weist zur Einbringung der Harnstofflösung H ein elektrisch steuerbares Ventil 12 auf. Das Ventil 12 ist mit dem Abgasraum 4 in der Weise verbunden, daß die Austrittsöffnung 14 des Ventils 12 unmittelbar in den Abgasraum 4 mündet.

Das Ventil 12 ist in einen für die Harnstofflösung H vorgesehenen Umwälzkreislauf 16 geschaltet, der ein Bestandteil des Dosiersystems 10 ist. Im Umwälzkreislauf 16 gelangt die Harnstofflösung H von einem Vorratsbehälter 18 aus über ein Leitungssystem 20 zum elektrisch steuerbaren Ventil 12. Ein in den Umwälzkreislauf 16 geschalteter Druckregler 22 bewirkt einen konstanten Druck der Harnstofflösung H im Umwälzkreislauf 16. Für eine ständige Umwälzung der Harnstofflösung H ist in den Umwälzkreislauf 16 eine Pumpe 24 geschaltet.

Das elektrisch steuerbare Ventil 12 ist zudem über einen Kühlmittelkreislauf 26 kühlbar. Der Kühlmitteikreislauf 26 ist an einen ohnehin in der als Dieselmotor ausgebildeten Verbrennungsanlage 2 vorhandenen Kühlmittelkreislauf angeschlossen.

Das Dosiersystem 10 umfaßt weiterhin eine im Abgasraum 4 angeordnete Prallvorrichtung 28. Diese verursacht eine Richtungsänderung der in den Abgasraum 4 eingebrachten Harnstofflösung H. Dies bewirkt eine besonders homogene Verteilung der Harnstofflösung H in dem Abgasraum 4 der Verbrennungsanlage 2. Dadurch ist eine besonders vollständige Reaktion der Harnstofflösung H mit den Stickoxiden (NOₓ) des Abgases A gewährleistet.

Das Dosiersystem 10 ist für eine elektrisch steuerbare Zudosierung der Harnstofflösung H in den Abgasraum 4 der Verbrennungsanlage 2 in Abhängigkeit vom Massenstrom der Stickoxide (NOₓ) ausgelegt. Hierfür sind das elektrisch steuerbare Ventil 12 und eine Kontrolleinheit 30 des Abgasreinigungssystems 6 über einen elektrischen Anschluß 32 miteinander verbunden. Der elektrische Anschluß 32 ist dabei im Ausführungsbeispiel mit einem ohnehin vorhandenen, nicht anderweitig belegten Kontakt der Kontrolleinheit 30 verbunden. Ein derartiger, nicht anderweitig belegter Kontakt der Kontrolleinheit 30 ist üblicherweise bei einem Dieselmotor eines Personenkraftwagens vorhanden.

Für eine Regelung des Massenstroms der Stickoxide (NOₓ) ist die Kontrolleinheit 30 über einen elektrischen Anschluß 34 mit einer im Abgasraum 4 angeordneten Meßeinrichtung 36 und über einen elektrischen Anschluß 38 mit einer elektrischen Einspritzausrüstung 40 für Kraftstoff für die Verbrennungsanlage 2 verbunden. Ohne eine Regelung wäre der Massenstrom der Stickoxide (NOₓ) starken Schwankungen unterworfen, da schon geringe Last- oder Drehzahlschwankungen der Verbrennungsanlage 2 eine große Veränderung des Massenstroms bewirken können. Ein für ungeregelten Massenstrom der Stickoxide (NOₓ) vorgesehenes Dosiersystem müßte daher hochdynamisch und in weiten Betriebsbereichen der Verbrennungsanlage 2 genau arbeitend ausgelegt sein. Bei geregeltem Massenstrom sind diese Anforderungen an das Dosiersystem 10 nicht erforderlich.

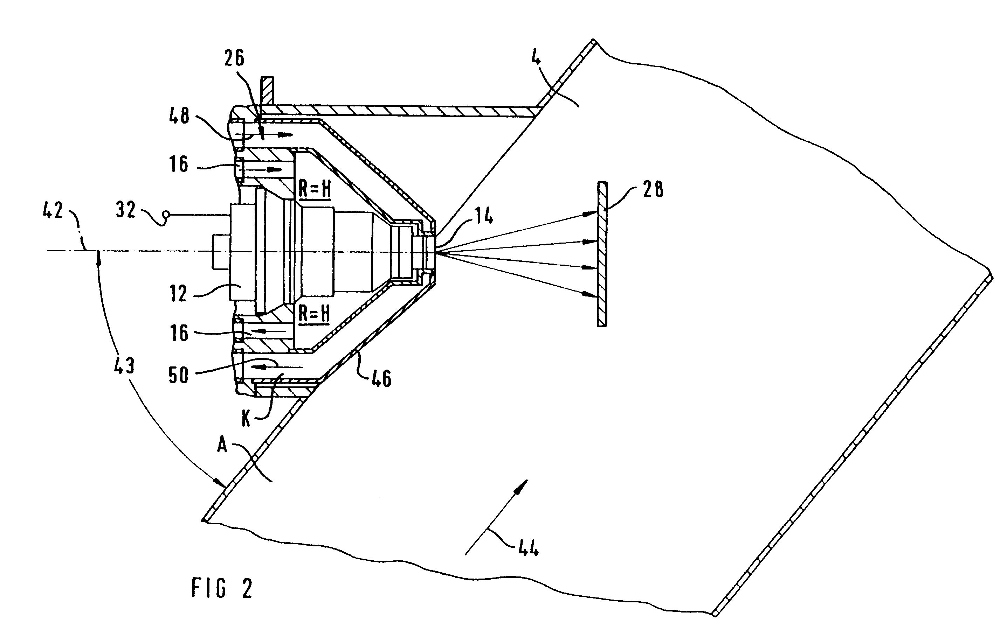

Wie in Figur 2 im Detail dargestellt, mündet die Austrittsöffnung 14 des elektrisch steuerbaren Ventils 12 unmittelbar in den Abgasraum 4. Das über den Anschluß 32 elektrisch steuerbare Ventil 12 des Dosiersystems 10 ist hierbei derart am Abgasraum 4 angebracht, daß seine Hauptachse 42 einen Winkel 43 von annähernd 45° mit der Hauptströmungsrichtung 44 des Abgases A im Abgasraum 4 einschließt. Diese Anordnung bewirkt einen besonders guten Transport der in den Abgasraum 4 eingebrachten Harnstofflösung H entlang der Hauptströmungsrichtung 44 des Abgases A und damit eine besonders günstige Vermischung der Harnstofflösung H mit dem Abgas A.

Das in den Umwälzkreislauf 16 geschaltete elektrisch steuerbare Ventil 12 ist teilweise von Harnstofflösung H umspülbar. Das Ventil 12 ist außerdem über einen von Kühlmittel K durchflossenen Adapter 46 am Abgasraum 4 angebracht. Der Adapter 46 ist in den Kühlmittelkreislauf 26 geschaltet und mit diesem über einen Kühlmittelzufluß 48 und über einen Kühlmittelabfluß 50 verbunden. Das Ventil 12 ist somit indirekt über das den Adapter 46 durchströmende Kühlmittel K und direkt über die Harnstofflösung H kühlbar. Im Abgasraum 4 ist die Prallvorrichtung 28 des Dosiersystems 10 derart angeordnet, daß sie eine Richtungsänderung der in den Abgasraum 4 eingebrachten Harnstofflösung H verursacht.

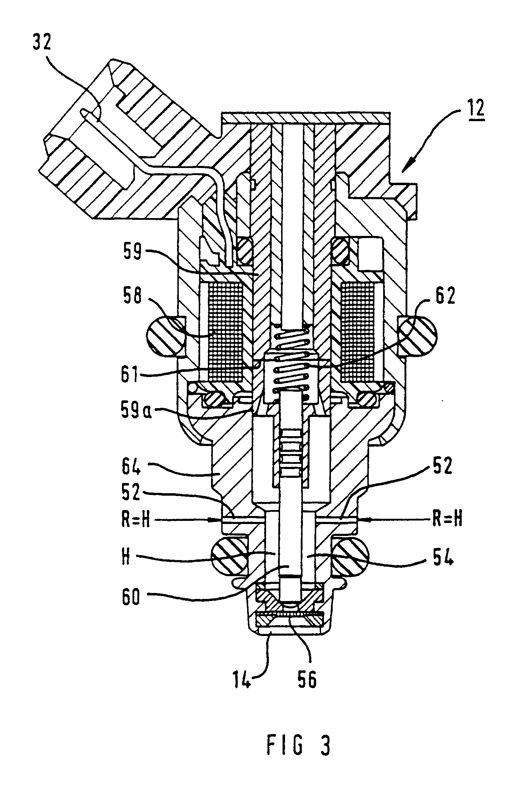

Figur 3 zeigt im Längsschnitt eine mögliche Ausführungsform des elektrisch steuerbaren Ventils 12. Das elektrisch steuerbare Ventil 12 ist über eine seitliche Zuführung 52 für die als Reduktionsmittel R vorgesehene Harnstofflösung H in den Umwälzkreislauf 16 geschaltet. Mit der Zuführung 52 ist ein für die Harnstofflösung H vorgesehener Vorhalteraum 54 verbunden, der der Austrittsöffnung 14 des elektrisch steuerbaren Ventils 12 vorgelagert ist. Unmittelbar vor der Austrittsöffnung 14 des Ventils 12 ist ein Sieb 56 angeordnet, das eine homogene Verteilung der in den Abgasraum 4 eingebrachten Harnstofflösung H bewirkt.

Das Ventil 12 ist für einen elektromagnetischen Betrieb vorgesehen. Dazu ist eine Magnetspule 58 des Ventils 12 über den elektrischen Anschluß 32 mit der Kontrolleinheit 30 des Abgasreinigungssystems 6 verbunden. Führt die Magnetspule 58 Strom, so entsteht ein magnetisches Feld, durch das der mit dem unteren Teil 59a des Zylinders 59 verbundene Ventilstempel 60 des Ventils 12 anhebbar ist. Ein Anheben des Ventilstempels 60 öffnet das Ventil 12, schließt annähernd die Trennfuge 61 und hat ein Zusammendrücken einer Rückstellfeder 62 zur Folge. Die Rückstellfeder 62 führt den Ventilstempel 60 bei abgeschaltetem Spulenstrom in seine das Ventil 12 verschließende Ruheposition zurück.

Weitere Details zur Ausgestaltung des Ventils 12 sind in Figur 3 in fachüblicher Weise dargestellt und hier nicht näher erläutert. Das hier dargestellte elektrisch steuerbare Ventil 12 ist ein sogenanntes fußgespeistes Ventil, da der "Fuß" 64 des Ventils 12 von Harnstofflösung H umspülbar ist. Dabei wird als "Fuß" eines Ventils allgemein der auslassende Bereich des Ventils bezeichnet. Alternativ kann auch ein kopfgespeistes Ventil Verwendung finden, bei dem die Zuführung des Harnstoffs H über den "Kopf" erfolgt. Beide Ventilarten sind herkömmliche Bauteile und üblicherweise zur Benzineinspritzung bei Verbrennungsmotoren vorgesehen. Die Komponenten des Ventils 12 sind im Ausführungsbeispiel derart ausgelegt, daß eine Zerstörung derselben durch eine chemische Zersetzung durch Harnstofflösung H ausgeschlossen ist. Mit anderen Worten: Die Komponenten des Ventils 12 sind resistent gegenüber Harnstofflösung H und/oder ihren Zersetzungsprodukten.

Das Abgasreinigungssystem 6 der Verbrennungsanlage 2 reduziert Stickoxide (NOₓ) mit Hilfe von Ammoniak (NH₃) und des DeNOₓ-Katalysators 8 zu Stickstoff (NOₓ) und Wasser (H₂O). Als Vorstufe des nicht geruchsneutralen Ammoniaks (NH₃) erfolgt beim Betrieb des Abgasreinigungssystems 6 die Einbringung von Harnstofflösung H in den Abgasraum 4 durch das Dosiersystem 10. Die Harnstofflösung H wird dabei in Abhängigkeit vom geregelten Massenstrom der Stickoxide (NOₓ) zudosiert.
Die Einbringung der Harnstofflösung H erfolgt elektromagnetisch getaktet. Dazu wird der Magnetspule 58 über den elektrischen Anschluß 32 Strom zugeführt, so daß ein magnetisches Feld entsteht. Dieses bewirkt ein Anheben des Ventilstempels 60. Dabei wird die Feder 62 zusammengedrückt. Der in dem Umwälzkreislauf 16 der Harnstofflösung H bestehende Druck bewirkt dann ein Austreten der Harnstofflösung H aus dem Ventil 12 in den Abgasraum 4 hinein. Wird die Stromzufuhr der Magnetspule 58 durch den elektrischen Anschluß 32 unterbrochen, so bricht das zuvor entstandene Magnetfeld zusammen. Der Ventilstempel 60 wird durch die Rückstellfeder 62 in seine Ruheposition zurückgeführt und schließt damit das Ventil 12. Dadurch ist ein elektromagnetisch getaktetes Öffnen und Schließen des Ventils 12 möglich.

Das Dosiersystem 10 ist außerdem dafür ausgelegt, eine Aufheizung der Harnstofflösung H in den Bereichen, die durch die Wärme des durch den Abgasraum 4 hindurchströmenden Abgases A aufheizbar sind, besonders zuverlässig zu verhindern. Hierfür wird die Harnstofflösung H einerseits durch den Umwälzkreislauf 16 umgewälzt. Andererseits wird das elektrisch steuerbare Ventil 12 durch den Kühlmittelkreislauf 26 gekühlt.

Die Verbrennungsanlage 2 weist somit ein mit besonders geringem technischen Aufwand bereitstellbares Dosiersystem 10 auf, das beim Betrieb lediglich die Überwachung der dosierten Einbringung der Harnstofflösung H in den Abgasraum 4 erfordert. Durch den Einsatz eines elektrisch steuerbaren Ventils 12, dessen Austrittsöffnung 14 unmittelbar in den Abgasraum 4 mündet, ist der Verzicht auf ein technisch aufwendiges Druckluftsystem möglich. Zudem ist das Dosiersystem 10 derart ausgebildet, daß die elektrisch steuerbare Absperrstelle des Ventils 12 mit der Einspeisestelle für das Reduktionsmittel R unmittelbar zusammenfällt. Dadurch entfällt der üblicherweise durch Druckluft zu kühlende Bereich zwischen diesen beiden Stellen. Die Gefahr einer Aufheizung der Harnstofflösung H und eine daraus resultierende Verdampfung und/oder ein Ausflocken einzelner Lösungsbestandteile ist dabei auch beim Verzicht auf ein technisch aufwendiges Druckluftsystem besonders gering gehalten.

## Patentansprüche

1. Dosiersystem (10) zur Einbringung eines Reduktionsmittels (R) in einen Abgasraum (4) einer Verbrennungsanlage (2), **dadurch gekennzeichnet, daß** zur druckluftlosen Einbringung des Reduktionsmittels (R) ein mit einem Vorratsbehälter (18) enthaltend ein, als gelöster Feststoff vorliegendes Reduktionsmittel (R) strömungstechnisch verbundenes, elektrisch steuerbares Ventil (12) vorgesehen ist, dessen Austrittsöffnung (14) im Abgasraum (4) angeordnet ist.

2. Dosiersystem (10) nach Anspruch 1, bei dem ein der Austrittsöffnung (14) des Ventils (12) vorgelagerter Vorhalteraum (54) für das Reduktionsmittel (R) in einen Umwälzkreislauf (16) geschaltet ist.

3. Dosiersystem (10) nach Anspruch 1 oder 2, bei dem das Ventil (12) über einen Kühlmittelkreislauf (26) kühlbar ist.

4. Dosiersystem (10) nach einem der Ansprüche 1 bis 3, bei dem das Ventil (12) derart an dem Abgasraum (4) angeordnet ist, daß seine Hauptachse (42) einen Winkel (43) von weniger als 90° mit der Hauptströmungsrichung (44) des Abgases (A) im Abgasraum (4) einschließt.

5. Dosiersystem (10) nach einem der Ansprüche 1 bis 4, mit einer im Abgasraum (4) angeordneten Prallvorrichtung (28), die eine Richtungsänderung von in den Abgasraum (4) eingebrachtem Reduktionsmittel (R) verursacht.

6. Verwendung eines Dosiersystems (10) nach einem der Ansprüche 1 bis 5 zur Einbringung von Harnstofflösung (H) als Reduktionsmittel (R) in einen Abgasraum (4) einer als Dieselmotor ausgebildeten Verbrennungsanlage (2).

## Claims

1. Metering system (10) for introducing a reducing agent (R) into an exhaust-gas chamber (4) of a combustion unit (2), **characterized in that** in order to introduce the reducing agent (R) without using compressed air an electrically controllable valve (12) is provided, which is flow-connected to a reservoir (18) containing a reducing agent (R) present as a dissolved solid and the outlet opening (14) of which is arranged in the exhaust-gas chamber (4).

2. Metering system (10) according to Claim 1, in which a holding chamber (54) for the reducing agent (R), which is mounted in front of the outlet opening (14) of the valve (12), is connected into a recirculating circuit (16).

3. Metering system (10) according to Claim 1 or 2, in which the valve (12) can be cooled by means of a coolant circuit (26).

4. Metering system (10) according to one of Claims 1 to 3, in which the valve (12) is arranged on the exhaust-gas chamber (4) in such a manner that its principal axis (42) includes an angle (43) of less than 90° with the principal direction of flow (44) of the exhaust gas (A) in the exhaust-gas chamber (4).

5. Metering system (10) according to one of Claims 1 to 4, having a baffle device (28) which is arranged in the exhaust-gas chamber (4) and causes a change in direction of reducing agent (R) which has been introduced into the exhaust-gas chamber (4).

6. Use of a metering system (10) according to one of Claims 1 to 5 for introducing urea solution (H) as reducing agent (R) into an exhaust-gas chamber (4) of a combustion unit (2) which is designed as a diesel engine.

## Revendications

1. Système (10) d'addition de manière dosée pour introduire un agent (R) réducteur dans une chambre (4) d'effluent gazeux d'une installation (2) de combustion, **caractérisé en ce que**, pour l'introduction sans air comprimé de l'agent (R) réducteur, il est prévu une vanne (12) qui peut être commandée électriquement, qui communique du point de vue de la technique des fluides avec un réservoir (18) contenant un agent (R) réducteur se présentant sous la forme d'une matière solide dissoute et dont l'orifice (14) de sortie est disposé dans la chambre (4) pour l'effluent gazeux.

2. Système (10) de dosage suivant la revendication 1, dans lequel une antichambre (54) pour l'agent (R) réducteur est montée en amont de l'orifice (54) de sortie de la vanne (12) dans un circuit (16) de recirculation.

3. Système (10) de dosage suivant la revendication 1 ou 2, dans lequel la vanne (12) peut être refroidie par un circuit (26) pour du fluide de refroidissement.

4. Système (10) de dosage suivant l'une des revendications 1 à 3, dans lequel la vanne (12) est montée sur la chambre (4) pour l'effluent gazeux, de façon que son axe (42) principal fasse un angle (43) de moins de 90° avec la direction (44) principale d'écoulement de l'effluent (A) gazeux dans la chambre (4) pour l'effluent gazeux.

5. Système (10) de dosage suivant l'une des revendications 1 à 4, comprenant un dispositif (28) de rebondissement, qui est monté dans la chambre (4) pour l'effluent gazeux et qui provoque un changement de direction de l'agent (R) réducteur introduit dans la chambre (4) pour l'effluent gazeux.

6. Utilisation d'un système (10) d'addition dosée suivant l'une des revendications 1 à 5 pour introduire une solution (H) d'urée servant d'agent (R) réducteur dans une chambre (4) pour l'effluent gazeux d'une installation (2) de combustion constituée sous la forme d'un moteur diesel.
